Europäisches Patentamt

European Patent Office

Office européen des brevets

(19)

(11) Veröffentlichungsnummer: **0 337 337**
**A2**

(12) **EUROPÄISCHE PATENTANMELDUNG**

(21) Anmeldenummer: 89106256.4

(51) Int. Cl.⁴: **H02H 11/00**

(22) Anmeldetag: 08.04.89

(30) Priorität: **12.04.88 DE 3812072**

(43) Veröffentlichungstag der Anmeldung:
**18.10.89 Patentblatt 89/42**

(84) Benannte Vertragsstaaten:
**CH DE FR GB IT LI SE**

(71) Anmelder: **Licentia Patent-Verwaltungs-GmbH**
**Theodor-Stern-Kai 1**
**D-6000 Frankfurt/Main 70(DE)**

(72) Erfinder: **Speh, Rainer, Dipl.-Ing.**
**Niederschelder Weg 8**
**D-6000 Frankfurt/Main 50(DE)**
Erfinder: **Landwehr, Herbert, Dipl.-Ing.**
**Nordhauser Strasse 2**
**D-1000 Berlin 10(DE)**
Erfinder: **Hoppe-Oehl, Heinrich, Dipl.-Ing.**
**Theodor-Körner-Strasse 1**
**D-6602 Dudweiler(DE)**

(74) Vertreter: **Lertes, Kurt, Dr. et al**
**Licentia Patent-Verwaltungs-GmbH**
**Theodor-Stern-Kai 1**
**D-6000 Frankfurt/M 70(DE)**

(54) **Verfahren zum schaltfehlergeschützten Betätigen der Schaltgeräte einer Schaltanlage.**

(57) Gegenstand der Erfindung ist ein Verfahren zum schaltfehlergeschützten Batätigen der Schaltgeräte einer Schaltanlage. Der topologische Aufbau der Schaltanlage und vom topologischen Aufbau unabhängige Schaltfehlerschutz-Verriegelungsregeln werden gespeichert. Aus den aktuellen Stellungsmeldesignalen der Schaltgeräte der Schaltanlage und dem gespeicherten topologischen Aufbau der Schaltanlage werden mit einem Basissatz von topologischen Elementen der aktuelle Betriebszustand der Schaltanlage gebildet und mittels der gespeicherten Schaltfehlerschutz-Verriegelungsregeln zur Freigabe oder Blockierung von Schalthandlungs-Anforderungsbefehlen verarbeitet.

Als Basissatz werden die Anfangs- und Endknoten und der Typ der Schaltgeräte sowie die Randknoten verwendet. Durch einen Schalthandlungs-Anforderungsbefehl für ein Schaltgerät werden, ausgehend von dessen Anfangs-und Endknoten, Baumenentwicklungen durchgeführt, mit denen unter Einbeziehung des Zustands der Schaltgeräte galvanisch verbundene Gebiete festgestellt werden. Aus dem Gesamtzustand des Gebiets wird durch Vergleich mit Schaltfehlerschutz-Verriegelungsregeln die Freigabe oder Blockierung des Schalthandlungs-Anforderungsbefehls bestimmt.

EP 0 337 337 A2

F1  F2  F3  F4  F5

I : 0

SS I

SS II

I : 0

I : 0
II : 1
III : 1
IV : 1

I : 0

I : 0

I : 1

I : 0

I : 1

I : 0
II : 0
III : 1
IV : 1

I : 0
II : 0
III : 1
IV : 1

I : 1

I : 1

I : 0
II : 0
III : 0
IV : 1

I : 1

I : 0

Fig. 1

## Verfahren zum schaltfehlergeschützten Betätigen der Schaltgeräte einer Schaltanlage

Die Erfindung bezieht sich auf ein Verfahren zum schaltfehlergeschützten Betätigen der Schaltgeräte einer Schaltanlage, wobei der topologische Aufbau der Schaltanlage und vom topologischen Aufbau unabhängige Schaltfehlerschutz-Verriegelungsregeln gespeichert, werden, die auf einem Basissatz von topologischen Elementen aufbauen, mit denen alle möglichen Betriebszustände beliebig aufgebauter Schaltanlagen angebbar sind, und wobei aus den aktuellen Stellungsmeldesignalen der Schaltgeräte der Schaltanlage und dem gespeicherten topologischen Aufbau der Schaltanlage mit dem Basissatz von topologischen Elementen der aktuelle Betriebszustand der Schaltanlage gebildet und mittels der gespeicherten Schaltfehlerschutz-Verriegelungsregeln zur Freigabe oder Blockierung von Schalthandlungs-Anforderungsbefehlen verarbeitet wird.

Fehlschaltungen von Trennschaltern sind häufig die Ursache von Betriebsstörungen und Unfällen in Schaltanlagen. Aus den gültigen VDE-Vorschriften leitet sich ausschließlich der Einsatz von Verriegelungseinrichtungen zum Zwecke des Personenschutzes des Bedienungspersonals ab. Dieses beruht im wesentlichen auf der Forderung, Trenner nicht unter Last zu schalten (DIN 57101/VDE 0101, 11.80; DIN 57670/VDE 0670, Teil 2, 09.81).

Bei den im Einsatz befindlichen Verriegelungseinrichtungen unterscheidet man zwischen konstruktiven mechanischen bzw. elektropneumatischen Lösungen in Verbindung mit dem Schaltgerät und elektrischen Zusatzeinrichtungen für eine gesamte Schaltanlage. Letzere basieren teilweise auf verteilten Mikroprozessorstrukturen (Brand, K.-P.; Kopainsky, J.; Wimmer, W.: Mikroprozessorgestützte Verriegelung von Schaltanlagen mit beliebiger Sammelschienenanordnung, Brown Boveri Technik (1987), S.261-268; sowie Grohmann, W.; Kummutat, G.; Niebergall, H.: Neues elektronisches Schaltfehlerschutzgerät, Siemens-Energietechnik (1983), S.93-96).

In modernen leittechnischen Systemen für Schaltanlagen kann die Verriegelungsaufgabe als integriertes Softwarepaket realisiert werden. Die Notwendigkeit einer eigenständigen Einrichtung entfällt.

Trennt man die Topologie der Schaltanlage von den aktuellen Schaltzuständen der Schaltgeräte und von den anzuwendenden Regeln für die Verriegelungsaufgabe, so erhält man Verfahren, die u.a. eine einfache Projektierung ermöglichen. Erste Ansätze hierzu wurden bereits Ende der siebziger Jahre veröffentlicht (Traca-de-Almeida, H.: Digitalcomputer switching of high voltage substations, Ph. D. Thesis, Imperial College, University of London, March 1977).

Bekannt ist ein Verfahren zum schaltfehlergeschützten Betätigen der Schaltgeräte einer Schaltanlage, bei dem aus den Signalen der Stellungsmeldekontakte der Schaltgeräte der aktuelle Schaltzustand der Anlage erfaßt wird. Schalthandlungs-Anforderungssignale werden auf der Basis des festgestellten Betriebszustands auf Freigabe oder Blockierung geprüft. Der topologischen Aufbau der Schaltanlage und die Schaltfehlerschutz-Verriegelungsbedingungen werden unabhängig voneinander gespeichert (EP-OS 0224 711).

Der Erfindung liegt die Aufgabe zugrunde, ein Verfahren der eingangs beschriebenen Gattung derart weiterzuentwickeln, daß die Nachteile ausschließlich topologischer Verfahren zur Freigabe oder zum Blockieren der Schalthandlungs-Anforderungsbefehle vermieden werden.

Die Aufgabe wird erfindungsgemäß durch die im Anspruch 1 beschriebenen Maßnahmen gelöst.

Das im Anspruch 1 beschriebene Verfahren ermöglicht die weitgehende Vermeidung von unverriegeltem Schalten durch Flexibilisierung von bestehenden Verriegelungsbedingungen. Darüber hinaus können die Ergebnisse des Verfahrens für weitergehende Aufgaben innerhalb der Schaltanlagenleittechnik, wie z.B. in Schaltprogrammen, verwendet werden. Mit dem im Anspruch 1 beschriebenen Verfahren wird aufbauend auf einfachen topologischen Elementen, z.B. den Anfangs- und Endknoten sowie dem Typ eines Schaltgeräts (Leitungs-, Trenn- und Erdungsschalter) sowie durch die Grenzen des Beobachtungsgebietes (Randknoten) mit Hilfe der gespeicherten Topologie eine "Baumentwicklung" durchgeführt. Nach einem Schalthandlungs-Anforderungsbefehl wird von den Anfangs- und Endknoten des jeweiligen Schaltgeräts eine knotenorientierte Baumentwicklung gestartet, die aus einem an sich bekannten Entscheidungsbaumverfahren abgeleitet ist. Entscheidungsbaumverfahren sind aus dem Buch "Operations-Research-Methoden und Modelle der Optimalplanung" von Müller-Merbach, Verlag Franz Vahlen, München, 3. Auflage 1973, bekannt. Durch die Baumentwicklung werden die galvanisch miteinander verbundenen Gebiete ermittelt, wobei als mögliche Zustände der Anfangs- und Endknoten und der Randknoten zwischen Spannung, Last und Erde, die durch Parametrierung während der Erstinitialisierung bzw. durch einen on-line Änderungsdienst den Randknoten der Schaltanlage zugewiesen werden. Durch geschlossene Schaltgeräte werden diese Zustände fortgeschaltet. Daneben können sich isolierte Knoten bzw. Gebiete ergeben, die keinen der drei oben genannten Zustände annehmen. Ein undefiniertes Gebiet ergibt sich aus einem isolierten Gebiet

2

mit mindestens einem gestörten Schaltgerät.

Galvanisch verbundene Gebiete entstehen durch geschlossene Schaltgeräte. Der Gesamtzustand eines Gebietes (Dominanz) ergibt sich aus den einzelnen Knotenzuständen des Gebietes nach folgender Prioritätsliste:

Spannung über Last, isoliertem Knoten und undefiniertem Gebiet

Erde über Last, isoliertem Knoten und undefiniertem Gebiet

Last über isoliertem Knoten und undefiniertem Gebiet

Undefiniertes Gebiet über isoliertem Knoten

Für die Schaltfehlerschutz-Verriegelung sind folgende Zustände der Schaltgeräte relevant:

- Schaltgerät geöffnet
- Schaltgerät geschlossen
- Schaltgerät in Störstellung
- Schaltgerät läuft

Ein wesentliches Kennzeichen des im Anspruch 1 beschriebenen Verfahrens ist, daß es ausgehend von einem topologischen Ansatz Entscheidungskriterien für die Freigabe oder Sperre von angeforderten Schaltgeräten ermittelt. Dabei bleibt durch die Trennung von Topologie, Schaltzustand und Regelwerk die Flexibilität hinsichtlich der Projektierung und der Parametrierung des Verriegelungsverfahrens voll erhalten.

Die Grundidee des Verfahrens besteht darin, dauf beiden Seiten eines zu schaltenden Schaltgerätes die Dominanz der jeweiligen galvanisch verbundenen Gebiete zu bestimmen und die Zulässigkeit der angeforderten Schalthandlung durch Dominanzvergleich zu verifizieren. Gefundene parallele Pfade zum angeforderten Schaltgerät liefern zusätzliche Entscheidungskriterien.

Das Verriegelungsverfahren basiert auf den beiden Wegen "Baumentwicklung" und "Suche nach parallelen Pfaden". Nach einem Schalthandlungs-Anforderungsbefehl werden zunächst von den Anfangs- und Endknoten des jeweiligen Schaltgeräts die knotenorientierten Baumentwicklungen gestartet. Mit diesen Baumentwicklungen werden die galvanisch verbundenen Gebiete ermittelt und die Dominanzen sowie die Schaltgerätetypen und deren Zustände erfaßt. Die Zustände der Schaltgerätetypen ergeben sich z.B. aus den Stellungsmeldesignalen der Schaltgeräte. Die Entscheidung über die Freigabe oder Blockierung eines Schalthandlungs-Anforderungsbefehls kann ausschließlich durch Dominanzvergleich erfolgen. Hierbei ist zwischen kritischen und unkritischen Dominanzdoublen zu unterscheiden. Die erstgenannten leiten sich aus den sicherheitsrelevanten Verriegelungsbedingungen ab, während die anderen betriebsrelevant sind und anwenderspezifisch parametriert werden können.

Wird bei der Baumentwicklung mindestens ein paralleler Pfad zum angeforderten Schaltgerät gefunden, so ist es je nach Typ und Schalthandlung notwendig, die Art aller parallelen Pfade näher zu untersuchen. Dies geschieht mit der Pfadsuche, die als zweigorientierte Baumentwicklung realisiert ist. Ergebnisse der Pfadsuche können z.B. Aussagen zur Existenz von Leistungsschaltern und gestörten Schaltgeräten in den parallelen Pfaden sein. Beispielsweise dürfen zwei Gebiete mit der Dominanz Spannung dann mit einem Trennschalter verbunden werden, wenn bereits eine parallele Verbindung über einen Leistungsschalter besteht.

Die Erfindung wird im folgenden anhand von in einer Zeichnung dargestellten Ausführungsbeispielen näher beschrieben, aus denen sich weitere Einzelheiten, Merkmale und Vorteile ergeben.
Es zeigen

Fig. 1 ein Blockschaltbild einer Schaltanlage, in der Schalthandlungen ausgeführt werden sollen,

Fig. 2 ein Schaltbild zur Veranschaulichung der Baumentwicklung auf beiden Seiten eines Schaltgerätes, das eine Schalthandlung ausführen soll,

Fig. 3 ein Schaltbild der in Fig. 1 dargestellten Schaltanlage unter Angabe von parallelen Pfaden als Grundlage für die Entscheidung über eine Schalthandlung.

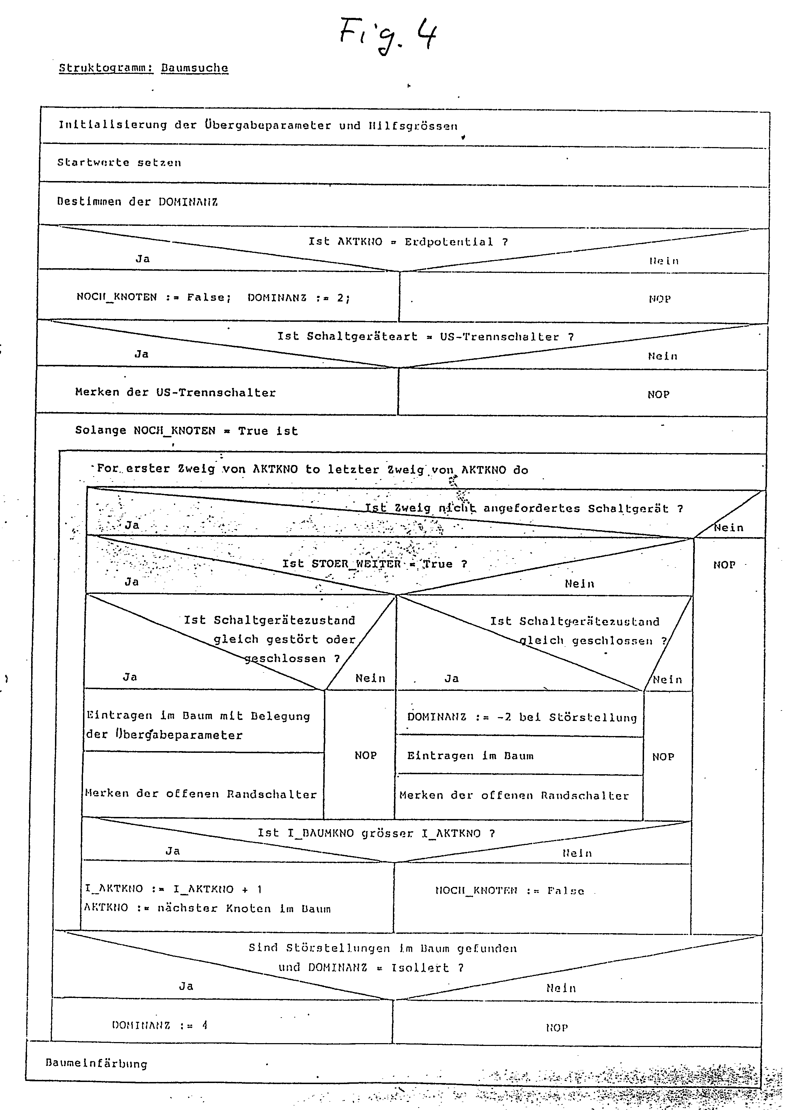

Fig. 4 ein Struktogramm einer Baumentwicklung,

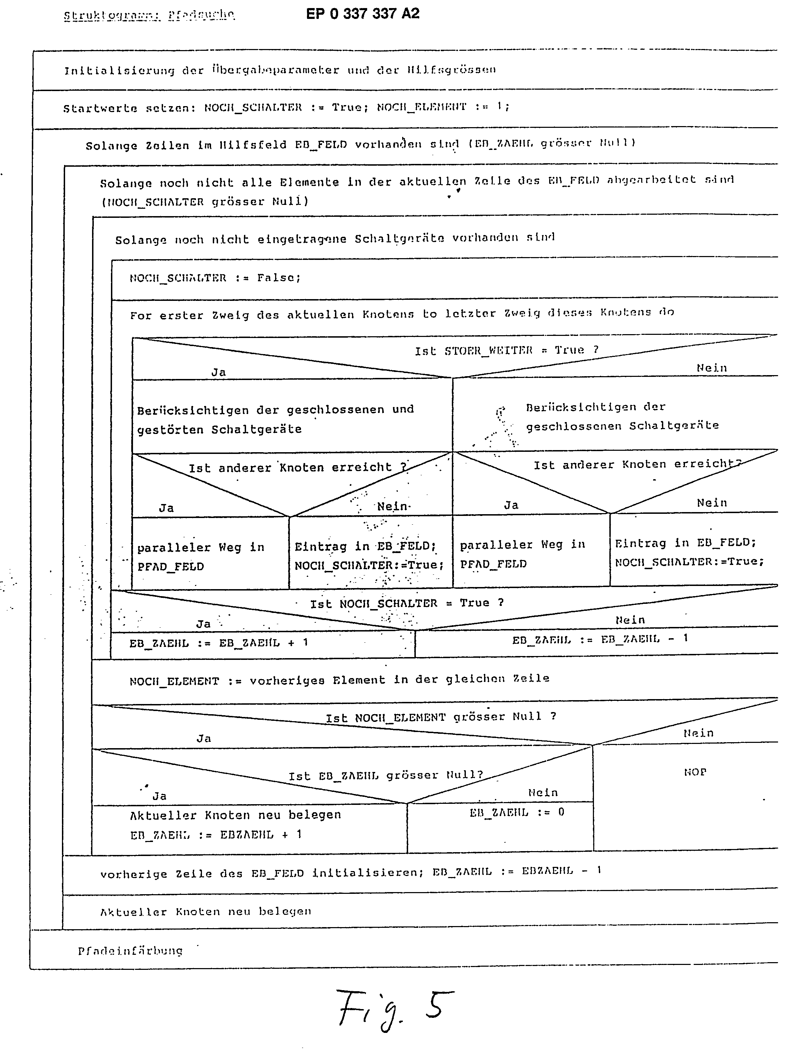

Fig. 5 ein Struktogramm einer Pfadsuche

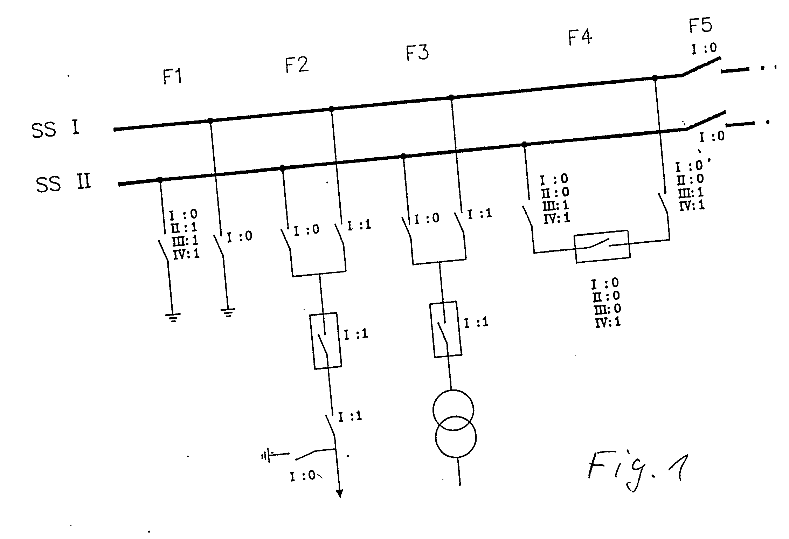

Anhand der in Fig. 1 dargestellten Schaltanlage wird die Entscheidungsfindung durch Dominanzvergleich erläutert. Die Schaltanlage enthält vier Schaltfelder F1, F2, F3, F4, F5 und zwei Sammelschienen SSI und SSII. Im Schaltfeld F1 sind zwei, je an eine Sammelschiene angeschlossene Sammelschienenerdungsschalter vorgesehen. Im Schaltfeld F2 sind die beiden Sammelschienen SSI und SSII je über einen Trennschalter an einen Leistungsschalter angeschlossen, dem über einen Trennschalter ein Abzweig nachgeschaltet ist. Weiterhin ist ein mit dem Abzweig verbundener Erdungsschalter vorgesehen. Im Schaltfeld F3 sind zwei je an eine Sammelschiene angeschlossene Trennschalter und ein Leitungsschalter vorhanden. An den Leistungsschalter ist ein Transformator angeschlossen. Das Schaltfeld F4 enthält einen Kuppelschalter und Trenn schalter für die beiden Sammelschienen SSI und SSII. Im Schaltfeld F5 sind zwei

3

Sammelschienenlängstrennschalter angeordnet.

Die Schaltzustände der Schaltgeräte sowie die Phasen der Schalthandlung sind in der Zeichnung durch Ziffern beschrieben. Die römischen Ziffern geben die Phasen an, die arabischen die zugehörigen Schaltzustände. Dabei kennzeichnet "0" den Zustand AUS und "1" den Zustand EIN. Der Ausgangszustand ist mit Phase "I" bezeichnet.

Der topologische Aufbau der in Fig. 1 dargestellten Schaltanlage ist gespeichert. Auch die Signale der Stellungsmeldekontakte der Schaltgeräte werden gespeichert und jeweils aktualisiert.

Dominanzvergleich nach Fig. 1

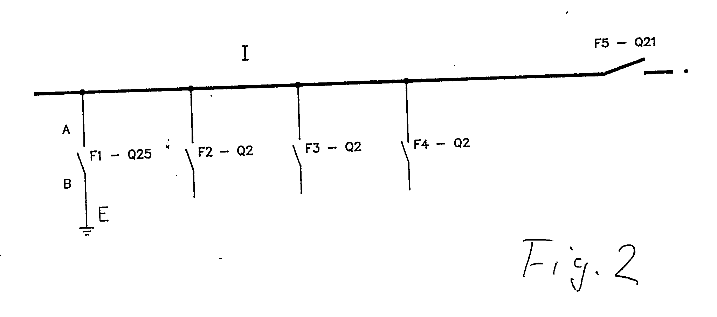

Im ersten Schritt (Phase II) soll die Sammelschiene II mit dem Sammelschienenerdungsschalter im Feld 1 F1-Q25 geerdet werden. Mit Hilfe eines in einem Speicher enthaltenen Steuerprograms werden von den Anfangs- und Endknoten des Sammelschienenerdungsschalters jeweils auf der Basis des gespeicherten topologischen Aufbaus der Schaltanlage unter Berücksichtigung der Schaltgerätezustände Baumentwicklungen durchgeführt. Dabei werden galvanisch verbundene Gebiete festgestellt, die mit den sie begrenzenden Randschaltgeräten in Fig. 2 dargestellt sind. Danach werden die Dominanzen der galvanisch verbundenen Gebiete festgestellt. Vom Knoten A aus wird die Dominanz "isolierter Knoten", im folgenden auch "I" genannt, festgestellt. Vom Knoten B wird die Dominanz Erde, im folgenden auch "E" genannt, erkannt. Anschließend werden die Dominanzen mit Schaltfehlerschutz-Verriegelungsbedingungen überprüft. Da Erdungsschalter dieses Dominanzdouble schalten dürfen, erfolgt eine Freigabe.

Im zweiten Schritt (Phase III) sollen die Sammelschienen I und II gekuppelt werden, obwohl Sammelschiene II weiterhin geerdet ist (Fig. 1). Dazu werden zunächst im Kuppelfeld die Sammelschienentrennschalter F4-Q2 und F4-Q1 eingelegt. Diese Vorgänge können parallel ablaufen.

Es werden wiederum auf der Basis des topologischen Aufbaus der Schaltanlage unter Berücksichtigung der Schaltgerätezustände Baumentwicklungen werden. Anschließend werden die Dominanzen erfaßt. Für F4-Q1 wird ein Dominanzdouble Spannung, im folgenden kurz S genannt, I gefunden, wofür aufgrund der Schaltfehlerschutz-Verriegelungsbedingungen eine Freigabe erfolgt.

Eine Freigabe von F4-Q2 aufgrund des Dominanzdoubles "E-I" würde die Fortschaltung von Erdpotential mit einem Trennschalter beinhalten.

Diese nach den bisherigen Verriegelungslösungen nicht zulässige Schaltung ist anwenderspezifisch parametrierbar. Aufgrund der vollständigen Information, über die das neue Verriegelungsverfahren bezüglich des Anlagenzustandes verfügt, ist diese Schaltung jedoch unkritisch und im Sinne einer Flexibilisierung allgemein vorzuschlagen.

Zur Kupplung der Sammelschienen müßte der Kuppelschalter F4-Q0 in Phase IV geschlossen werden. Hier wird jedoch eine Sperre wegen des kritischen Dominanzdoubles "S-E" gesetzt, das aufgrund von Schaltfehlerschutz-Verriegelungsregeln unzulässig ist.

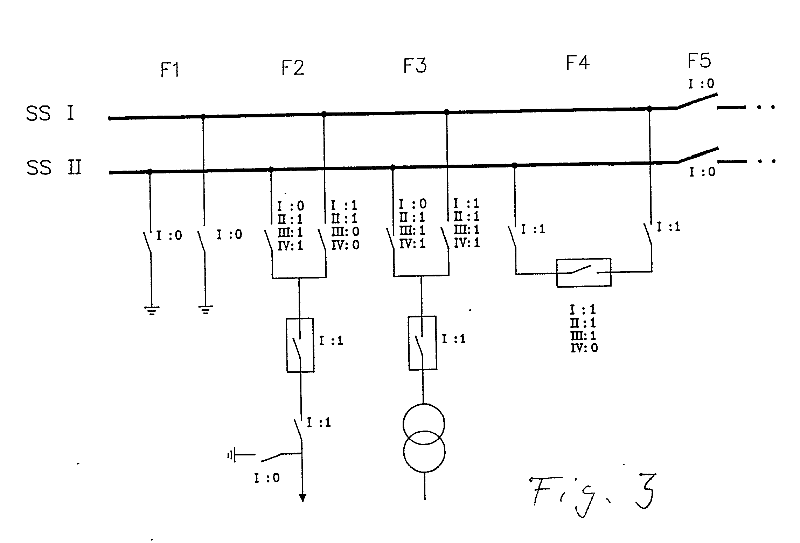

Berücksichtigung paralleler Pfade nach Fig. 3

Die Durchführung eines Sammelschienenwechsels in den Feldern 2 und 3 von Sammelschiene I auf Sammelschiene II wird in Fig. 3 dargestellt. Die Kupplung wird als bereits geschlossen angenommen.

Im ersten Schritt (Phase II) werden die Sammelschienentrennschalter F2-Q2 und F3-Q2 geschlossen. Es erfolgt jeweils eine Freigabe wegen des parallelen Pfades über den Leistungsschalter in der Kupplung.

Im nächsten Schritt (Phase III) wird der Sammelschienentrennschalter F2-Q1 geöffnet. Das Verfahren erteilt eine Freigabe aufgrund des weiterhin vorhandenen parallelen Pfades über die Kupplung.

Anschließend soll in Phase IV der Leitstungsschalter im Kuppelfeld geöffnet werden. obwohl im Feld 3 noch beide Sammelschienentrennschalter eingeschaltet sind. Diese Schalthandlung wird nicht freigegeben, weil zum zu öffnenden Leistungsschalter in der Kupplung ein paralleler Pfad in Feld 3 ohne Leistungsschalter besteht.

Erfolgt der Ausschaltbefehl für den Sammelschienentrennschalter F3-Q1 (in Fig. 3 nicht dargestellt), so ermittelt das Verfahren eine Freigabe der Schalthandlung aufgrund des parallelen Pfades in der Kupplung. Abschließend kann dann die Kupplung wie geplant geöffnet werden.

Das oben beschriebene Verriegelungsverfahren beinhaltet alle Vorzüge topologischer Verfahren, wie z.B. leichte Projektierbarkeit und Erweiterbarkeit.

Durch die Anwendung zweier, voneinander unabhängiger Baumsuchverfahren werden weitergehende Möglichkeiten geschaffen. Examplarisch seien hier parallel laufende Schalthandlungen sowie die Funktionsfähigkeit des Verfahrens auch bei gestörten Schaltgeräten genannt. In diesem Zusammenhang wird auf das Buch "Graphen-Algorithmen-Programme", von Walther, H., Nägler, G, Springer Verlag, Wien, New York hingeweisen, aus dem die Graphentheorie und insbesondere die Breitensuche und Tiefensuche für das Absuchen von topologischen Bäumen bekannt ist.

Die Aufteilung des Regelwerks in einen fixen sicherheitsrelevanten und einen betriebsrelevanten Teil erlaubt eine Anpassung des Verfahrens an die verschiedenen Gegebenheiten der Anwender. Dazu dienen auch je eine zusätzliche UND- und ODER-Verknüpfung pro Schaltgerät, die mit Hilfe boole'-scher Gleichungen aus der Datenbasis eines Schaltanlagenleitsystems formuliert werden und als betriebsrelevante Bedingungen eingehen können. Im Folgenden werden die Bedingungen für die Entscheidungsfindung detaillierter beschrieben.

Da in modernen leittechnischen Systemen der gesamte topologische Aufbau und der Zustand der Schaltanlage bekannt ist, kann mit Hilfe eines topologischen Verfahrens eine Analyse des gesamten galvanisch zusammenhängenden Gebietes durchgeführt werden. Dies macht die Entscheidungsfindung nur noch abhängig von der Schaltgeräteart und von dem Schaltzustand der Anlage.

Es erfolgt eine strenge Trennung von Topologie und Schaltzustand der Schaltanlage und des Regelwerkes, um eine hohe Flexibilität hinsichtlich der Projektierung der Anlage und der Paramentrierung des Regelwerkes zu erreichen. Um die Topologie einer Schaltanlage nachbilden zu können, sind Daten über die Schaltgeräte, Sammelschienen und Randknoten erforderlich. Die Lage und die Bedeutung der Schaltgeräte innerhalb der Schaltenlage wird durch die Angabe eines Anfangs- und Endknotens und durch Gerätetypen festgelegt. Bei Sammelschienen und Randknoten genügt die Angabe des Knotens. Randknoten können Einspeiseknoten (Source), Verbraucherknoten (Load) oder Erdungsknoten (Earth) sein.

Der Gesamtzustand der Schaltanlage wird durch den Zustand der einzelnen Schaltgeräte charakterisiert. Es werden folgende Zustände eines Schaltgerätes unterschieden:

Schaltgerät ist geöffnet

Schaltgerät ist geschlossen

Schaltgerät ist in Störstellung

Schaltgerät läuft

Diese Angaben über die Schaltanlage genügen, um· die Topologie und den Zustand der Anlage nachzubilden, und somit dienen sie als Grundlage für die Verriegelung.

Ein galvanisch zusammenhängendes Gebiet ist derjenige Teil einer Schaltanlage, der durch geschlossene Schaltgeräte gebildet wird. Gebieten, in denen sich ein Randknoten befindet, wird der oben bereits erläuterte Zustand des Randknotens zugeordnet. Umfaßt ein Gebiet mehrere Randknoten, so wird der dominierende Zustand ermittelt. Daher auch der Begriff der Dominanz. Befindet sich kein Randknoten in einem Gebiet, so wird es als isoliert (Isolated) bezeichnet. Isolierte Gebiete mit mindestens einer Störstellung sind undefinierte Gebiete. Wie der Begriff der Dominanz schon aussagt, ist nicht jeder Zustand gleichbedeutend. Es gilt folgende Zustandsordnung:

| S(ource) | dominiert über L(oad), U(ndefined), I(solated) |
|----------|-----------------------------------------------|
| E(arth)  | dominiert über L, U, I |
| L        | dominiert über U, I |
| U        | dominiert über I |

Die Entscheidungsfindung basiert auf zwei zentralen Entscheidungsbaumverfahren: Einerseits einem knotenorientierten, der Baumsuche, um das galvanisch zusammenhängende Gebiet zu ermitteln, und andererseits einem zweigorientierten, der Pfadsuche, um alle parallelen Wege zu finden.

Bei jeder Schaltanforderung ermittelt die Baumsuche die Dominanz auf beiden Seiten des angeforderten Schaltgerätes. Die Zulässigkeit der Schaltanforderung wird anhand dieses Dominanzdoubles überprüft. Es wird zwischen kritischen und unkritischen Dominanzdoublen unterschieden.

Kritische Dominanzdouble (wie z.B. Source - Earth) führen aus sicherheitsrelevanten Gesichtspunkten zu einer Sperre der Schaltanforderung.

Unkritische Dominanzdouble (wie z.B. Earth - Isolated) können aus Gründen der Betriebsphilosophie zu einer Sperre führen, müssen dies aber nicht. Aus diesem Grunde sind die unkritischen Dominanzdouble paramentrierbar. Parallele Wege zu einem angeforderten Schaltgerät beinhalten zusätzliche Aussagen für die Entscheidungsfindung.

Zuerst müssen demnach die Daten über die Topologie der Schaltanlage aufbereitet werden, d.h. es müssen Daten über die Schaltgerätearten, die Art der Randknoten und die Sammelschienen eingegeben werden. Den bei offenen Schaltgeräten galvanisch zusammenhängenden Anlagenteilen werden Knotennummern nach einem bestimmten Schema zugeordnet.
Es werden folgende Schaltgeräte unterschieden:

| Schaltgeräteart | Bedeutung |
|---|---|
| 1 | Leistungsschalter mit Trennstreckenbedingung |
| 2 | Leistungsschalter ohne Trennstreckenbedingung |
| 3 | Trennschalter |
| 4 | - |
| 5 | Erdungsschalter |
| 6 | Kuppelschalter mit Trennstreckenbedingung |
| 7 | Kuppelschalter ohne Trennstreckenbedingung |
| 8 | - |
| 9 | Abgang |

Die für die Verriegelung entscheidenden Eigenschaften der Schaltgeräte sind folgende:
Die Schaltgerätezustände werden wie folgt unterschieden:

| Markierung | Schaltgerätezustand |
|---|---|
| 0 | Schaltgerät in Störstelle |
| 1 | Schaltgerät ist geöffnet |
| 2 | Schaltgerät ist geschlossen |
| 3 | Schaltgerät läuft |

Tab. 3:

| Für Sammelschienen gelten folgende Unterschiede: | |
|---|---|
| Markierung | Sammelschienenart |
| 1 | Sammelschiene |
| 2 | Umgehungsschiene öder Hilfsschiene |

Es gilt folgende Trennstreckenbedingung:
Nur ein Gebiet, das durch Schaltgeräte begrenzt ist, die die Trennstreckenbedingung erfüllen, darf geerdet werden. Ein offener Trennschalter erfüllt prinzipiell die Bedingung der Trennstrecke. Ein Leistungsschalter oder Kuppelschalter kann, muß aber nicht die Trennstreckenbedingung erfüllen, deshalb die Unterscheidung zwischen Leistungsschalter bzw. Kuppelschalter mit und ohne Trennstreckenbedingung.
Eine Schaltanlage läßt sich durch folgende Daten kennzeichnen:
- Anzahl der Schaltgeräte in der Schaltanlage
- Anzahl der Zweige in der Schaltanlage (Schaltgeräte + Abgänge)
- Anzahl der Knoten in der Schaltanlage (Für jeden Abgang muß noch ein zusätzlicher Knoten definiert werden, da ein Abgang als Zweig anzusehen ist).
- Anzahl der Randknoten, durch die die Schaltanlage vom übrigen Netz getrennt ist.
- Anzahl der Sammelschienenabschnitte (siehe Tabelle 3)
- Anzahl der Umgehungsschienenabschnitte (siehe Tabelle 3)

Schaltgerätenummer: laufende Nummierung der Zweige

Knoten 1: erster Anschlußknoten des Schaltgerätes
Knoten 2: zweiter Anschlußknoten des Schaltgerätes
Art: Schaltgeräteart
Zustand: Zustand des Schaltgerätes
Die Schaltgeräte werden aufgrund folgender Eigenarten unterschiedlich behandelt:

| Schaltgerät | Eigenart |
|---|---|
| Leistungsschalter | unter Last schaltbar |
| Kuppelschalter | Kupplung von Sammelschienen möglich |
| Trennschalter | offen - erfüllt die Trennstreckenbedingung; können strom- oder spannungslos geschaltet werden |
| Erdungsschalter | ein Ende ist mit dem Erdpotential verbunden; dienen zum Erden von Anlagenteilen |
| Abgang | Als Schaltgerät eingeführt, um mit allen anderen Zweigen gleich behandelt zu werden. Immer geschlossen - kann nicht geschaltet werden. Begrenzt die Anlage. |

Für die Baum- und Pfadsuche werden Hilfsvektoren erzeugt, die aus den Daten der Topologieerkennung abgeleitet werden:

a) Da es nicht vorauszusagen ist, in welcher Richtung der jeweilige Zweig durchlaufen wird, ist jeder Zweig zweimal eingetragen, und zwar in Hinrichtung (gleichbedeutend mit der laufenden Nummerierung) und in Rückwärtsrichtung. Diese Rückwärtsrichtung wird in einem Vektor AND_RICHT abgelegt.

b) Die Schaltgeräte sind in aufsteigender Reihenfolge dem ersten Knoten nachgeordnet. An der j-ten Stelle eines Vektors EZWKN01 ist die Nummer des Schaltgerätes eingetragen, das als erstes den Knoten j als Anschlußknoten hat. Das letzte Schaltgerät mit dem Knoten j steht in einem Vektor LZWKN01. Diese beiden Vektoren sind von Bedeutung, wenn es um die Frage geht, welche Schaltgeräte an einem bestimmten Knoten angeschlossen sind.

c) Wenn eine Schaltung mehrere Sammelschienen hat, kann jeder Abgang mit einem Trennschalter auf eine der Sammelschienen geschaltet werden. Alle diese Trennschalter, die den gleichen Abgang auf eine Sammelschiene schalten können, gehören zu einer Gruppe. In einem Vektor SCH2_ZEIGER steht an der Stelle eines solchen Trennschalter vermerkt, zu welcher Gruppe er gehört und zwar folgendermaßen. Willkürlich mit einem Trennschalter einer Gruppe beginnend wird an seine Stelle in einem Vektor SCH2_ZEIGER die Nummer des nächsten Trennschalters der gleichen Gruppe geschrieben. Dies wird solange weitergeführt, bis der letzte Trennschalter der Gruppe erreicht ist. An diese Stelle wird die Nummer des ersten Trennschalters der Gruppe geschrieben. Analoges gilt auch für Sammelschienen-Leistungsschalter.

Bypaßtrennschalter dürfen nur geschlossen werden, wenn der parallele Weg über den zugehörigen Bypaß-Leistungsschalter geschlossen ist. An den Stellen der Bypaßtrennschalter im Vektor SCH2_ZEIGER ist deshalb die Nummer des zugehörigen Bypaß-Leistungsschalters eingetragen.

d) Da die Bezeichnung der Schaltgeräteart sehr wenig über die Bedeutung des Schaltgerätes in der Schaltanlage und damit auch für die Verriegelung aussagt, wird die Schaltgeräteart genauer wie folgt spezifiziert.

| Schaltgeräteart | Bedeutung |
|---|---|
| 1 | Leistungsschalter mit Trennstreckenbedingung |
| 2 | Leistungsschalter ohne Trennstreckenbedingung |
| 3 | Trennschalter |
| 4 | - |
| 5 | Erdungsschalter |
| 6 | Kuppelschalter mit Trennstreckenbedingung |
| 7 | Kuppelschalter ohne Trennstreckenbedingung |
| 8 | - |
| 9 | Abgang |
| 10 | - |
| 11 | Sammelschienen-Leistungsschalter mit Trennstreckenbedingung |
| 12 | Sammelschienen-Leistungsschalter ohne Trennstreckenbedingung |
| 13 | Sammelschienen-Trennschalter |
| 14 | Umgehungsschienen-Trennschalter im Kuppelfeld |
| 15 | Bypaß-Trennschalter |
| 16 | Sammelschienen-Längstrennschalter |
| 17 | Sammelschienen-Trennschalter im Kuppelfeld |
| 18 | Umgehungsschienen-Längstrennschalter |

Im folgenden werden die Merkmale der Schaltgerätearten erläutert, die ausschlaggebend sind, welcher Art sie zugeordnet waren.

Umgehungsschienen-Längstrennschalter (18): Beide Knoten dieses Schaltgerätes sind Umgehungsschienenknoten. Mit diesem Schaltgerät kann eine Umgehungsschiene längsgetrennt werden.

Umgehungsschienen-Trennschalter (4): Der eine Knoten dieses Schaltgerätes ist die Umgehungsschiene und am anderen Knoten ist kein Kuppelschalter angeschlossen.

Umgehungsschienen-Trennschalter im Kuppelfeld (14): Der eine Knoten dieses Schaltgerätes ist die Umgehungsschiene und am anderen Knoten ist ein Kuppelschalter angeschlossen.

Sammelschienen-Längstrennschalter (16): Beide Knoten sind Sammelschienenknoten. Mit diesem Schaltgerät kann die Sammelschiene längsgetrennt werden

Sammelschienen-Trennschalter (13): Der eine Knoten ist ein Sammelschienenknoten und am anderen Knoten ist kein Kuppelschalter und kein Abgang angeschlossen.

Sammelschienen-Trennschalter im Kuppelfeld (17): Der eine Knoten ist ein Sammelschienenknoten und am anderen Knoten ist ein Kuppelschalter angeschlossen.

Bypaß-Trennschalter (15): Der eine Knoten ist mit einem Abgang verbunden und am anderen Knoten schließt sich nicht nur ein Leitstungsschalter an. (siehe Bilder 44, 45)

Sammelschienen-Leistungsschalter (11, 12): Wird ein Abgang über zwei Leistungsschalter (Zwei-Leistungsschalter-Methode) versorgt, die keine Kuppelschalter sind, so müssen die beiden Leistungsschalter gegeneinander verriegelt werden, da sie die gleiche Bedeutung wie Sammelschienen-Trennschalter haben. Daher auch die Namensgebung Sammelschienen-Leistungsschalter.

Die Baumsuche ist eine knotenorientiertes Entscheidungsbaumverfahren, d.h. es werden alle Knoten in den Baum eingetragen, die über ein geschlossenes (bzw. in Störstellung befindliches) Schaltgerät erreicht werden. Somit findet man das galvanisch zusammenhängende Gebiet heraus. Die Baumsuche startet von einem Knoten (ANFKN01) des angeforderten Schaltgerätes. Wird der andere Knoten (ENDKN01) des Schaltgerätes gefunden, so zeigt dies an, daß ein paralleler Weg zu dem angeforderten Schaltgerät existiert. Da die spätere Entscheidungsfindung Zusatzinformation über das Baumgebiet benötigt, wird diese im Laufe der Baumsuche ermittelt und dem Übergabeparametern zugewiesen. Um die Bedeutung der Übergabeparameter zu verstehen, werden diese mit dem erforderlichen Hintergrund erläutert.

Die DOMINANZ ist der dominierende Zustand des galvanisch zusammenhängenden Gebietes, der beim Finden von Randknoten ermittelt wird. Ob ein Schaltgerät eine Freigabe oder Sperre erhält, ist u.a. abhängig von den Dominanzen auf beiden Seiten des angeforderten Schaltgerätes und von der Art des Schaltgerätes.

I_STOER enthält die Anzahl der in Störstellung befindlichen Schaltgeräte. Ist ein Schaltgerät in Störstellung, so kann keine Aussage getroffen werden, ob der Kontakt zwischen den beiden Knotenpunkten geschlossen oder geöffnet ist. Die Störstellung des Schaltgerätes kann durch die Stellung des Schaltgerätes selbst oder durch Störung des Sekundärsystems entstehen.

Z. B. : Ein Trennschalter läuft aus einem Ausgangszustand los, erreicht aber nie seinen Endzustand. Er hat irgendeine Mittelstellung, die weder als offen noch als geschlossen angenommen werden darf.

Durch Einbeziehen solcher Störstellungen in die Entscheidungsfindung wird verhindert, daß durch Schalterhandlungen ein Stromfluß über Störstellungen zustande kommt.

I_RAND enthält die Anzahl der Schaltgeräte, die das galvanisch zusammenhängende Gebiet von dem übrigen Teil der Schaltanlage abgrenzen. Soll ein Teil einer Schaltanlage geerdet werden, so muß gewährleistet sein, daß das zu erdende Gebiet durch offene Trennstrecken von dem übrigen Teil der Schaltanlage getrennt ist. Ist ein Leistungsschalter, der die Trennstreckenbedingung nicht erfüllt, als Randschalter erkannt, so muß ein sich dem Leistungsschalter anschließendes Schaltgerät die Trennstreckenbedingung erfüllen.

I-BYPASS enthält die Anzahl der sich im Baumgebiet befindlichen Bypaß-Trennschalter. Bypaß-Trennschalter dienen dazu, Leistungsschalter zu überbrücken, um diesen beispielsweise warten zu können. Da aber der Bypaß-Trennschalter nicht die komplette Funktion eines Leistungsschalters übernehmen kann, so muß gewährleistet sein, daß der Bypaß-Trennschalter immer über einen Ersatzschalter betrieben wird. D.h., der Abgang muß über einen Kuppelschalter, der die Funktion des ursprünglichen Leistungsschalters übernehmen kann, versorgt werden.

HILFSTRENER enthält die Anzahl der Umgehungsschienen-Trennschalter. Die Umgehungsschiene ist im Normalfall nicht als echte Sammelschiene ausgelegt und muß aus diesem Grunde als eine Hilfsschiene betrachtet werden. Mit Hilfe der Umgehungsschiene können Abgänge auch dann noch versorgt werden, wenn der Abgangsleistungsschalter nicht zur Verfügung steht. Auch hier stellt sich das Problem des Ersatzschalterbetriebes. Um zu gewährleisten, daß sich immer nur ein Abgang im Ersatzschalterbetrieb befindet, muß die Anzahl der Umgehungsschienen-Trennschalter pro Umgehungsschienenabschnitt einer Beschränkung unterworfen werden.

I_EINSP enthält die Anzahl der im Baumgebiet befindlichen Einspeisungen.

I_VERB enthält die Anzahl der im Baumgebiet befindlichen Verbraucher.

Durch Untersuchen der Wege, die zu den einzelnen Einspeisungen und Verbraucher führen, kann im Bypaßbetrieb eine Aussage getroffen werden, ob der Bypaß korrekt im Ersatzschalter betrieben wird oder nicht.

I_SS_BAUM enthält die Anzahl der im Baumgebiet befindlichen Sammelschienen. Wie vorher schon erwähnt, ist eine Umgehungsschiene im Normalfall nur eine Hilfsschiene und aus diesem Grunde darf eine Kupplung von zwei echten Sammelschienen über die Umgehungsschiene nicht erlaubt werden. D.h., ist eine Umgehungsschiene im Baumgebiet vorhanden, so muß vor dem Schalten überprüft werden, daß keine Kupplung über die Umgehungsschiene entsteht.

PARALLEL hat den Wert True, wenn mindestens ein paralleler Weg zu dem angeforderten Schaltgerät existiert.

In den folgenden Vektoren sind die Schaltgeräte des Baumgebietes aufgeführt, die zu der angeführten Klassifikation gehören:

STÖRUNG: in Störstellung befindliche Schaltgeräte

RAND_SCHALTER: Randschalter des Baumgebietes

EINSPEISUNG: Einspeisungen des Baumgebietes

VERBRAUCHER: Verbraucher des Baumgebietes

SS_BAUM: Sammelschienen des Baumgebietes

BYPASS_SCHALTER: Bypaß-Trennschalter des Baumgebietes

H_TRENNER: Umgehungsschienen-Trennschalter des Baumgebietes

Um eine Baumsuche zu starten, müssen Anfangsdaten bekannt sein:

SCHALTER 1: angefordertes Schaltgerät

SCHALTER 2: andere Richtung des angeforderten Schaltgerätes

STARTKNO: der eine Knoten des angeforderten Schaltgerätes

ANDKNO: der andere Knoten des angeforderten Schaltgerätes

STOER_WEITER entscheidet, ob in Störstellung befindliche Schaltgeräte im Baum berücksichtigt werden oder nicht.

TRUE: In Störstellung befindliche Schaltgeräte werden für die Baumsuche wie geschlossene Schaltgeräte behandelt. Sie werden jedoch im Vektor STOERUNG vorgemerkt, damit sie für eine eventuelle spätere Störstellungsuntersuchung bekannt sind.

FALSE: In Störstellung befindliche Schaltgeräte werden wie offene Schaltgeräte behandelt. Beim Auffinden eines solchen Schaltgerätes wird die Dominanz auf den Wert -2 gesetzt.

STOER_NAEHER: Ist eine weitergehende Störstellungsuntersuchung notwendig, so wird mit Hilfe des konstanten Übergabeparameters STOER_NAEHER die Störstellung als offenes Schaltgerät simuliert, ohne daß die Dominanz beim Auffinden einer solchen Störstellung auf den Wert -2 gesetzt wird.(siehe TRENNER__AUS, LS__AUS)

Alle diese Informationen über des galvanisch zusammenhängende Gebiet werden in der Baumsuche ermittelt. Die Funktionsweise wird im nachfolgenden Struktogramm näher erläutert.

Die Pfadsuche est ein zweigorientiertes Entscheidungsbaumverfahren. Unter Berücksichtung aller geschlossenen Schaltgeräte werden alle Pfade von einem Anfangsknoten zu einem Endknoten gesucht. Sind Anfangs- und Endknoten die beiden Anschlußknoten des Schaltgerätes, so sind die gefundenen Pfade parallele Wege zu dem entsprechenden Schaltgerät. Da es jedoch nicht genügt zu wissen, daß parallele Wege existieren, müssen zusätzliche Informationen über die Art der parallelen Wege bekannt sein. Um die Bedeutung der Übergabeparameter der Pfadsuche verstehen zu können, wird im folgenden ihre Bedeutung erläutert.

KS__PFAD enthält die Anzahl der in dem jeweiligen Pfad enthaltenen Kuppelschalter.

Ein Sammelschienenwechsel kann nur dann eingeleitet werden, wenn die Sammelschienen über einen Kuppelschalter gekuppelt sind.

KS__1__PFAD enthält die Schalgerätenummer des ersten Kuppelschalters, der in einem Pfad gefunden wird.

Ein Bypaß wird auch dann im Ersatzschalter betrieben, wenn mehrere Abgänge mit dem gleichen Bypaßtrennschalter verbunden sind, aber alle über den gleichen Kuppelschalter.

LS__PFAD enthält die Anzahl der im Pfad befindlichen Leistungsschalter. Prinzipiell kann eine Schaltgerät geschaltet werden, wenn ein paralleler Weg über einen Leistungsschalter existiert.

BY__PFAD enthält die Schaltgerätenummer des im Pfad gefundenen Bypasses.

Bypaßbetrieb kann unter Spannung nur dann eingeleitet werden, wenn der parallele Weg über den entsprechenden Leistungsschalter geschlossen ist. STOER__PFAD enthält die Anzahl der im Pfad befindlichen gestörten Schaltgeräte.

Existieren nur Pfade mit gestörten Schaltgeräten, so muß eine gesonderte Untersuchung der Pfade gestartet werden, um eine Aussage über die Zulässigkeit der Pfade für die Entscheidungsfindung machen zu können.

SS__LS__PFAD enthält die im Pfad enthaltenen Sammelschienen-Leistungsschalter.

SS__TR-Pfad enthält die im Pfad enthaltenen Sammelschienen-Trennschalter.

Ist ein Sammelschienenwechsel im Gange, so darf die Kupplung der Sammelschiene über den Kuppelschalter erst dann aufgehoben werden, wenn der Sammelschienenwechsel in allen Abgängen beendet ist, sonst würde eine Kupplung zweier Sammelschienen über nur Trennschalter zurückbleiben. Dies ist jedoch nicht zulässig. Analoges gilt für die Sammelschienen-Leistungsschalter bei der Zwei-Leistungsschaltermethode.

ELEMENT__PFAD enthält die Anzahl der Schaltgeräte im Pfad.

Über die Anzahl der Schaltgeräte, die parallel zu einem Kuppelschalter liegen, kann z.B. eine Längskupplung erkannt werden.

PFAD__ANZAHL gibt die Gesamtanzahl der gefundenen parallelen Wege an.

STOER__ANZAHL gibt die Zahl der parallelen Wege mit mindestens einem gestörten Schaltgerät an.

STOER__SERIE enthält die Information, ob mehrere gestörte Schaltgeräte in einem Pfad vorhanden sind.

TRUE: Es existiert mindestens ein paralleler Weg mit mehr als einem gestörtem Schaltgerät. Nur parallele Wege mit Störstellungen und dazu noch mindestens einer mit mehr als einem gestörten Schaltgerät lassen keine genaue Analyse der gestörten Schaltgeräte mehr zu. Daher muß die Schaltanforderung gesperrt werden.

SCHALTER: Zu diesem Schaltgerät sollen alle parallelen Wege gesucht werden.

ANFKNO: Anfangsknoten

ENDKNO: Endknoten

STOER__WEITER bestimmt, wie gestörte Schaltgeräte behandelt werden.

TRUE: In Störstellung befindliche Schaltgeräte werden wie geschlossene Schaltgeräte behandelt.

FALSE: In Störstellung befindliche Schaltgeräte werden wie offene Schaltgeräte behandelt.

Bei der Pfadsuche (zweigorientiert) werden alle geschlossenen Schaltgeräte, die miteinander verbunden sind, abgearbeitet. Durch Betrachten aller Kombinationen dieser Schaltgeräte, werden alle Wege herausgefunden, die von dem Anfangsknoten zu dem Endknoten führen.

Beginnend mit dem Anfangsknoten werden alle Schaltgeräte, die diesen gemeinsamen Knoten besitzen und geschlossen sind, in einem Hilfsfeld in die erste Zeile (erste Ebene) geschrieben und gleichzeitig im Vektor SCHON als eingetragen markiert. Es sind die verschiedenen Möglichkeiten, die von dem Anfangsknoten ausgehen. Da es sehr umständlich ist, alle Möglichkeiten gleichzeitig weiterzuverfolgen, geschieht dies nacheinander. Um jedoch zu wissen, welches Element in der jeweiligen Ebene abgearbeitet wird, ist ein Merker ST_2 gesetzt. In einem anderen Merker ST_1 ist die Gesamtanzahl der Möglichkeiten pro Ebene vermerkt.

Beim Aufbau der einzelnen Ebenen wird der Merker ST_2 stets auf das letzte Element in der jeweiligen Ebene gesetzt, d.h. das letzte Element einer jeden Ebene wird als Ausgangspunkt für die nächste Ebene genommen. Wird ein Schaltgerät gefunden, dessen Knoten mit dem Endknoten identisch ist, so ist ein Pfad erkannt. Die Stationen des Weges, die zu dem Endknoten geführt haben, werden durch die Schaltgeräte in der jeweiligen Ebene, auf die der Merker ST_2 zeigt, gekennzeichenet. Diese Schaltgeräte werden als Pfad in dem Feld PFAD_FELD abgelegt. Werden keine Schaltgeräte mehr gefunden, die in die nächste Ebene eingetragen werden können, so muß eine Ebene tiefer der Merker um Eins verschoben werden. Von diesem Schaltgerät ausgehend werden eventuelle neue Schaltgeräte oder parallele Wege gesucht.

Sind keine neuen Schaltgeräte mehr zu finden, so wird jeweils der Merker in der vorherigen Ebene in Eins zum Zeilenanfang hin versetzt und die Schaltgeräte der letzten Ebene werden wieder freigegeben. Ist er am Zeilenanfang angelangt, so beginnt das gleiche Spiel mit dem Merker eine Ebene tiefer.

Da durch das Zurückgehen in eine tiefere Ebene, die höhere Ebene wieder frei wird, muß diese neu initialisiert werden. Dieses Aufbauen von neuen Ebenen und das Rücksetzen des Merkers wird solange wiederholt, bis in der ersten Ebene alle Schaltgeräte abgearbeitet sind.

Jetzt sind alle Möglichkeiten gefunden, die von dem Anfangsknoten zu dem Endknoten führen.

Zum Schutz des Bedienungspersonals und der Anlage ist das Schalten in einer Schaltanlage bestimmten Verriegelungsbedingungen unterworfen. Zur Ermittlung einer Freigabe bzw. einer Sperre einer Schalthandlung werden nach herkömmlichen Verfahren nur wenige Schaltgeräte berücksichtigt, da sonst der Aufwand für die Verriegelung zu groß würde. Bei richtiger Wahl dieser Schaltgeräte kann zwar eine Fehlschaltung verhindert werden, aber die Flexibilität der Schaltmöglichkeiten wird dadurch sehr stark begrenzt. D.h. eine bestimmte Schaltreihenfolge wird erzwungen, obwohl auch andere Schaltfolgen zu keiner Fehlschaltung führen würden (z.B. Schalten eines Abganges auf eine isolierte Sammelschiene).

Ist eines der für die Schalthandlung relevant Schaltgeräte in Störstellung (kein definierter Zustand), so ist ein verriegeltes Schalten in dieser Situation nach herkömmlicher Art nicht mehr möglich, obwohl eine Störstellung keine Fehlschaltung nach sich ziehen muß.

Diesen großen Nachteil, daß nur eine begrenzte Anzahl von Schaltgeräten zur Entscheidungsfindung herangezogen werden, wird durch das erfindungsgemäße Betrachten des ganzen galvanisch zusammenhängenden Gebietes beseitigt.

Wird im Verlaufe der Überprüfung der Verriegelungsbedingungen ein Zustand gefunden, der eine genaue Aussage über Freigabe oder Sperre zuläßt, so wird an das Ende der Prozedur gesprungen, um die Rechenzeit und damit auch die Wartezeit für den Benutzer so klein wie möglich zu halten.

Die neuen Verriegelungsbedingungen sind von der Schaltgeräteart und der Betätigungsart abhängig. Aus diesen Gründen ist eine getrennte Behandlung der einzelnen Schaltgerätearten unumgänglich.

Als erstes wird prinzipiell das galvanisch zusammenhängende Gebiet ermittelt. Existieren parallele Wege zu dem angeforderten Schaltgerät, so werden diese alle gesucht und zur Entscheidungsfindung herangezogen. Wird im Laufe der Untersuchungen ein Zustand erkannt, der zu einer Freigabe bzw. zu einer Sperre führt, so wird die Überprüfung der Verriegelungsbedingungen beendet und das Ergebnis weitergegeben.

In einer Datei MELDUNG.TXT sind alle möglichen Kombinationen enthalten, die von der Verriegelung gefunden werden. Die entsprechende Meldung wird durch eine Zahl gekennzeichnet. Ob es sich um eine Freigabe oder Sperre der Schalthandlung handelt, bestimmt die Zahl. Ist die Zahl kleiner als ein bestimmter Wert, so ist es eine Freigabe. Die Schalthandlung wird gesperrt, wenn die Zahl größer als der Wert ist. Die Zahlen sind so gewählt, daß durch Addieren der Zahl aus einer Freigabe eine Sperre und durch Subtrahieren der Zahl aus der Sperre eine Freigabe gemacht werden kann. Diesen Umstand macht sich die Parametrierung zu Nutze.

Die Schaltungskonfigurationen, die zu einer Freigabe führen, sind im Folgenden erläutert.

Freigabe bei Leistungsschalter einschalten aufgrund von parallelen Wegen:

Sind in einem parallelen Weg Sammelschienen-Leistungsschalter enthalten, so liegt eine Kupplung von Sammelschienen vor und der angeforderte Leistungsschalter muß ein Sammelschienen-Leistungsschalter sein.

Sind in einem parallelen Weg nur Trennschalter enthalten und das angeforderte Schaltgerät ist ein Kuppelschalter, so handelt es sich um eine Kupplung.

Sind in einem parallelen Weg nur Trennschalter enthalten und das angeforderte Schaltgerät ist ein Leistungsschalter, so wird der parallele Weg zu einem Bypaßtrennschalter geschlossen.

Ein unterbrechungsfreier Übergang ist vom Ersatzschalterbetrieb in den Normalbetrieb möglich.

Ebenso ist ein unterbrechungsfreier Übergang vom Umgehungsbetrieb in den Normalbetrieb möglich.

Schließen des Ringes einer Ringsammelschiene ist aufgrund von Dominanzvergleich möglich. Mit einem Leistungsschalter dürfen zwei Gebiete mit der Dominanz S verbunden werden. Befindet sich in einem dieser Gebiete ein Bypaßtrennschalter, so muß überprüft werden, ob der Bypaßtrennschalter nach der Schalthandlung noch über einen Ersatzschalter betrieben wird. Der Netzanschluß schaltet Leistungsschalter bei Vorliegen der entsprechenden Bedingungen aus. Für das Ausschalten aufgrund von parallelen Wegen gelten die gleichen Bedingungen wie für das Einschalten der Leistungsschalter.

Für Trennschalter sind folgende Möglichkeiten bei der Freigabe zu berücksichtigen:

1. Freigabe aufgrund von parallelen Wegen

a) paralleler Weg mit nur Trennschaltern (Sammelschienenwechsel)

b) paralleler Weg mit Kuppelschalter (Längskupplung oder Sammelschienenwechsel)

c) Ersatzschalter- bzw. Umgehungsbetrieb

2. Freigabe aufgrund von Dominanzvergleich

a) Dominanzdouble: Spannung-Isoliert

b) Dominanzdouble: Erde-Isoliert

Bei der Freigabe der Ausschaltung von Trennschaltern sind folgende Möglichkeiten zu berücksichtigen:

1. Freigabe aufgrund von parallelen Wegen

a) Ein Umgehungsschienen-Längstrennschalter darf ausgeschaltet werden, wenn ein paralleler Weg über Kuppelschalter vorhanden ist.

b) Ein Sammelschienen-Längstrennschalter darf geöffnet werden, wenn ein paralleler Pfad mit Kuppelschalter aber nicht Sammelschienen-Trennschaltern vorhanden ist.

c) Ein Sammelschienen-Trennschalter darf geöffnet werden, wenn ein paralleler Weg mit Kuppelschalter existiert.

d) Mit Schaltgeräten der Umgehungsschiene kann ein Ersatzschalterbetrieb beendet werden.

e) Mit Schaltgeräten der Umgehungsschiene kann ein Umgehungsbetrieb beendet werden.

<u>Freigabe bei Bypaßtrennschalter einschalten:</u>

aufgrund von parallelen Wegen:

a) Der parallele Weg über den zugehörigen Leistungsschalter ist geschlossen und der Bypaßtrennschalter wird im Ersatzschalter betrieben.

b) Die Dominanzdouble S-I und L-I ergeben eine Freigabe der Schalthandlung, wenn der zugehörige Bypaß-Leistungsschalter nicht geschlossen ist.

<u>Freigabe bei Erdungsschalter einschalten:</u>

aufgrund von parallelen Wegen:

Wird ein paralleler Weg gefunden, so ist das Gebiet bereits geerdet.

Freigabe aufgrund von Dominanzvergleich:

Mit einem Erdungsschalter kann ein Gebiet mit jeder Dominanz außer S geerdet werden.

Freigabe bei Erdungsschalter ausschalten:

- aufgrund des Dominanzvergleichs
- Das verbleibende Gebiet behält die Dominanz E, bzw. erfüllt die Trennstreckenbedingung.

Im Gegensatz zu den bisherigen Verriegelungsverfahren ist durch die Kenntnis des gesamten galvanisch zusammenhängenden Gebietes eine genaue Aussage über den Zustand der Schaltanlage möglich. Durch diesen Umstand können die Schaltungszustände, die kein verriegeltes Schalten mehr zulassen, weiter vermindert werden. Die hierfür notwendigen weitergehenden Untersuchungen sind im Folgenden näher beschrieben.

Um gestörte Schaltgeräte in die Entscheidungsfindung einbeziehen zu können, werden sie von der Baum- und Pfadsuche wie geschlossene Schaltgeräte behandelt, falls der Merker STOER_WEITER gesetzt ist. Sind gestörte Schaltgeräte in der Baum- bzw. Pfadsuche berücksichtigt worden, so muß eine nähere Untersuchung der gestörten Schaltgeräte erfolgen, da eine Störstelung einen undefinierten Zustand darstellt.

Führt ein Dominanzvergleich zur Entscheidungsfindung, so kann durch Kenntnis der Lage der Störstellung im Baumgebiet eine Aussage getroffen werden, ob durch die Schalthandlung ein Stromfluß über die Störstellung zustand kommt oder nicht. Fließt ein Strom, so muß die Schalthandlung gesperrt werden.

Bei der Suche nach einem gesicherten Strompfad muß die Störstellung als offen angenommen werden. Von entscheidender Bedeutung ist die Tatsache, ob ein- oder ausgeschaltet werden soll.

Werden zwei Gebiete mit unterschiedlicher Dominanz miteinander verbunden, so erhält das entstehende Gebiet die höhere Dominanz. Die Störstellungsuntersuchung erfolgt nach dem Dominanzvergleich. Ergibt der Dominanzvergleich eine Freigabe, obwohl eine Störstellung in dem Baumgebiet ist, d.h. Störstellung in einem nich isolierten Gebiet (S, E, L) so muß nachgeprüft werden, ob über die Störstellung ein Strom fließen kann. Ist dies der Fall, so muß die ursprüngliche Freigabe in eine Sperre umgewandelt werden.

Je höher die Dominanz eines Gebietes ist, in dem sich die Störstellung befindet, desto kritischer ist dieser Zustand. Aus diesem Grunde ist zu vermeiden, daß ein Gebiet mit niederer Dominanz und Störstellung mit einem Gebiet mit höhere Dominanz verbunden wird. D.h. ist die Störstellung in dem niederdominanten Gebiet, so muß Schalthandlung gesperrt werden. Ist in dem Gebiet mit der höheren Dominanz eine Störstellung vorhanden, so muß vor dem Zusammenschalten überprüft werden, daß kein Stromfluß über die Störstellung erfolgt.

Dies ist nicht der Fall, wenn bei einer erneuten Dominanzbestimmung, bei der die gestörten Schaltgeräte als offen angenommen werden, die gleiche Dominanz wie vorher ermittelt wird. Dies bedeutet, daß die Störstellung keinen Einfluß auf die Dominanz hat und sie damit als unkritisch anzusehen ist. In diesem Fall erfolgt eine Freigabe der Schalthandlung. Wird nicht die gleiche Dominanz gefunden, so ist die Schalthandlung zu sperren, da keine sichere Aussage gemacht werden kann, ob Strom über die Störstellung fließt.

Sind auf beiden Seiten gleiche Dominanzen gefunden worden, so muß bei Vorhandensein von Störstellungen in dem Gebiet eine erneute Dominanzbestimmung erfolgen, in dem sich eine Störstellung befindet. Ob die ursprüngliche Freigabe aufgehoben wird, unterliegt den obengenannten Kriterien.

Durch Aufzeigen der einzelnen Dominanzverteilungen und der Lage der Störstellungen soll dargestellt werden, bei welchen Schaltungszuständen die Freigabe erhalten bleibt.

Liefert die Baumsuche die Information, daß parallele Wege zu dem angeforderten Schaltgerät existieren, so können mit der Pfadsuche alle parallelen Pfade gefunden werden. Befindet sich jedoch in jedem dieser Pfade mindestens ein gestörtes Schaltgerät, so kann ohne weitere Untersuchungen keine Aussage gemacht werden, ob die Schalthandlung erlaubt ist.

Sind mehrere gestörte Schaltgeräte in einem Pfad vorhanden, so muß die Schalthandlung gesperrt werden, da es keine Möglichkeit gibt, herauszufinden, ob durch die Schalthandlung ein Strom über die Störstellung fließt. In dieser kritischen Situation ist es ratsam, die Störstellungen vor anderen Schalthandlungen freizuschalten, soweit es der Betrieb der Schaltanlage zuläßt.

Der ungünstigste Fall bei einem parallelen Weg mit einer Störstellung ist, wenn die Störstellung tatsächlich ein offenes Schaltgerät darstellt. D.h. es existiert in Wirklichkeit kein paralleler Weg. In diesem Fall ist zu unterscheiden, ob eine Schaltanforderung zum ein- oder ausschalten vorliegt.

Beim Einschalten eines Schaltgerätes werden zwei Gebiete mit eventuell unterschiedlicher Dominanz verbunden, wenn die Störstellung ein offenes Schaltgerät ist.

Die Entscheidungsfindung wird auf einen Dominanzvergleich zurückgeführt, bei dem die gestörten Schaltgeräte als offen angenommen werden. Indem von dem ungünstigsten Fall ausgegangen wird, kann gewährleistet werden, daß keine Fehlschaltung zugelassen wird.

Beim Ausschalten besteht die Möglichkeit, daß die korrekt bestehende Verbindung zweier unter Spannung stehender Gebiete unterbrochen wird und damit erzwungen wird, daß Strom über die Störstellung fließen muß. Der ungünstigste Fall ist hier, wenn die Störstellung nicht als geschlossen angesehen werden kann.

Werden beide Bäume unter der Annahme, daß Störstellungen offene Schaltgeräte sind, nochmals entwickelt, so kann durch Vergleich der beiden neuen Dominanzen eine Entscheidung über die Schalthandlung getroffen werden.

Ist mindestens eine Dominanz I, so ist sicher, daß über die Störstellung kein Strom fließt, wenn das angeforderte Schaltgerät geöffnet wird. Wenn keine der Dominanzen I ist, so würde beim Durchführen der Schalthandlung ein Stormfluß über die Störstellung zustande kommen können.

Zu dem angeforderten Abgangsleitstungsschalter existiert ein paralleler Weg über den zugehörigen Bypaßtrennschalter, der sich jedoch in Störstellung befindet. Da nur ein paralleler Weg mit Störstellung existiert, muß dieser genauer untersucht werden. Die Baumentwicklungen auf beiden Seiten des angeforderten Schaltgerätes liefern unter der Annahme, daß die Störstellung offen ist, die Dominanzen S. Die Schalthandlung wird gesperrt.

Nach Abschalten des anderen Abganges wird erreicht, daß auf der einen Seite des angeforderten Schaltgerätes die Dominanz I gefunden wird. In diesem Zustand fließt über die Störstellung kein Strom, wenn der parallele Weg durch den Abgangsleistungsschalter unterbrochen wird. Die Schalthandlung wird freigegeben.

Um an Teilen einer Schaltanlage arbeiten zu können, müssen diese u.a. geerdet sein. Es dürfen jedoch nur Teile einer Schaltanlage geerdet werden, die durch Schaltgeräte begrenzt sind, die die Trennstreckenbedingung erfüllen. D.h. es müssen Trennstrecken zu den übrigen Anlagenteilen vorhanden sein, damit das Personal vor Spannungsüberschlägen geschützt ist.

Trennschalter erfüllen im Gegensatz zu Leistungsschaltern und Kuppelschaltern die Trennstreckenbedingung immer. Aus diesem Grunde wurde bei der Schalterart zwischen Leistungsschaltern, die die Trennstreckenbedingung erfüllen und denen, die sie nicht erfüllen unterschieden.

Nach bisherigen Verriegelungsbedingungen sind Erdungsschalter mit den entsprechenden Trennschaltern, die die erforderliche Trennstrecke herstellen, verriegelt. Z.B.: Der Sammelschienen-Erdungsschalter kann nur dann geschlossen werden, wenn alle Sammelschienen-Trennschalter derselben Sammelschiene offen sind.

Ein Abgang kann nur bei offenem Abgangstrennschalter geerdet werden.

Da der gesamte Zustand der Schaltanlage bekannt ist, muß nicht mehr gefordert werden, daß bestimmte Schaltgeräte die Trennstrecke herstellen, sondern es genügt die Information, daß ein zu erdendes Gebiet durch Trennstrecken von den übrigen Anlagenteilen getrennt ist.

Ist eine Dominanz = E (beim Erdungsschalter immer erfüllt, da eine Seite direkt im Erdpotential verbunden ist), so muß überprüft werden, ob das andere Gebiet die Trennstreckenbedingung erfüllt. Begrenzen Randschalter, die die Trennstreckenbedingung nicht erfüllen dieses Gebiet, so muß entweder auf der anderen Seite dieses Schaltgerätes wiederum die Dominanz E sein oder alle an diesen Schalter sich anschließenden Schaltgeräte müssen geöffnet sein. Sind diese Bedingungen erfüllt, so wird der Übergabeparameter der Prozedur TRENN_STRECKE gleich TRUE gesetzt und damit ergibt die Trennstreckenüberprüfung keinen Fehler.

Geerdete Gebiete erfüllen die Trennstreckenbedingung, da sonst keine Erdung möglich gewesen wäre. Es muß aber dafür gesorgt werden, daß durch Schalthandlungen dieser Umstand nicht beseitigt wird. Dies hat folgende Konsequenz:

Sind beide Dominanten ungleich E, so darf sich an einen Randschalter dieser Gebiete, der die Trennstreckenbedingung nicht erfüllt, kein Gebiet mit der Dominanz E anschließen. Durch die Schalthandlung würde ein Gebiet mit der Dominanz ungleich E entstehen, das nur durch ein Schaltgerät, das die Trennstreckenbedingung nicht erfüllt, von einem geerdeten Gebiet getrennt ist. Dies ist aus sicherheitsrelevanten Gründen nicht zulässig.


## Überprüfen der Umgehungsschienentrennschalter


Mit Hilfe einer Umgehungsschiene kann ein Abgang mit Spannung versorgt werden, wenn der Leistungsschalter in dem betreffenden Abgang z.B. durch Wartungsarbeiten blockiert ist. Da die Umgehungsschiene eine Notlösung für bestimmte Betriebszustände darstellt, ist es nicht notwendig, sie wie eine echte Sammelschiene zu dimensionieren. Es muß jedoch dafür gesorgt werden, daß sie nicht überlastet wird.

Ersatzschalterbetrieb:

Wenn ein Abgang aus irgendeinem Grunde nicht über den normalen Weg versorgt werden kann, so besteht die Möglichkeit dies über die Umgehungsschiene zu tun. Die Funktion des Leistungsschalters im Abgangsfeld übernimmt der Kuppelschalter im Kuppelfeld. Um die Verbindung von der Sammelschiene zum Abgang über die Umgehungsschiene herzustellen muß der entsprechende Sammelschienen-Trennschalter im Kuppelfeld, der Kuppelschalter, der Umgehungsschienen-Trennschalter im Kuppelfeld und der Umgehungsschienen-Trennschalter zu dem entsprechenden Abgang eingeschaltet werden. Da die Selektivität beim Abschalten eines Abgangs gewährleistet sein muß, ist es nicht erlaubt, zwei oder mehr Abgänge gleichzeitig über den gleichen Kuppelschalter im Ersatzschalterbetrieb zu fahren. Dies zu verhindern, ist die Aufgabe des HTR_TEST.

Umgehungsbetrieb:

Zwei Abgänge direkt über die Umgehungsschiene zu verbinden, ohne eine andere Sammelschiene zu benutzen, nennt man Umgehungsbetrieb. Die Anforderungen bezüglich des Schutzes werden von den entsprechenden gegenüberliegenden Netzstationen übernommen. Es kann jedoch nur zugelassen werden, daß zwei Abgänge direkt miteinander verbunden werden und nicht mehrere, da sonst die Umgehungsschiene überlastet werden könnte.

Aus diesen zwei Betriebszuständen der Umgehungsschiene ergeben sich folgende Bedingungen für die Anzahl der Umgehungsschienen-Trennschalter, die gleichzeitig in einem Umgehungsschienenabschnitt eingeschaltet sein dürfen.

Ersatzschalterbetrieb:

1. Ein Umgehungsschienen-Trennschalter im Kuppelfeld und ein Umgehungsschienen-Trennschalter zum Abgang hin.

2. Nur ein Umgehungsschienen-Trennschalter zum Abgang hin, wenn der Umgehungsschienen-Trennschalter im Kuppelfeld nicht vorhanden ist

Umgehungsbetrieb:

1. Die zwei Umgehungsschienen-Trennschalter zu den Abgängen hin, die direkt über die Umgehungsschiene miteinander verbunden werden.

Sind mehrere Umgehungsschienen oder Umgehungsschienenabschnitte (Längstrennung der Umgehungsschiene) in einer Schaltanlage vorhanden, so kann auf jedem Umgehungsschienenabschnitt ein solcher Notbetrieb gefahren werden. Der HRT_TEST überprüft, ob die drei oben aufgezählten Bedingungen für jeden Umgehungsschienenabschnitt erfüllt sind, wenn ein Schaltgerät eingeschaltet werden soll, das mit der umgehungsschiene verbunden ist. Diese Überprüfung ist nur notwendig, wenn der Dominanzvergleich eine Freigabe ermittelt hat.

In SF6 - Schaltanlagen ist aus baulichen Gründen eine Umgehungsschiene schwer zu realisieren. Um jedoch den Vorteil einer Umgehungsschiene nicht aufgeben zu müssen, sind oft Bypaßtrennschalter vorgesehen. Die Sammelschiene, die über den Bypaßtrennschalter direkt mit dem Abgang verbunden ist, wird als Kombi-Schiene benutzt. Im Normalbetrieb ist sie eine Sammelschiene, da sie auch als solche ausgelegt ist, und im Bypaßbetrieb erfüllt sie die Funktion einer Umgehungsschiene.

Im Bypaßbetrieb muß dafür gesorgt werden, daß ein Kuppelschalter bzw. ein Leistungsschalter die Funktion des Abgangsleistungsschalters übernimmt. Man unterscheidet zwei Arten von Bypaßtrennschalter.

1. Bypaßtrennschalter von Feld zu Feld
2. Bypaßtrennschalter im Feld

Der Bypaßtrennschalter von Feld zu Feld verbindet zwei Abgänge direkt miteinander, ohne daß diese mit einer Sammelschiene verbunden sind. In diesem Fall übernimmt der eine Abgangsleistungsschalter die Schutzfunktion für beide Abgänge, da durch Öffnen dieses Leistungsschalters beide Abgänge unterbrochen würden.

Mit dem Bypaßtrennschalter im Feld kann der Abgangsleistungsschalter überbrückt werden. Im Bypaßbetrieb verbindet der Bypaßtrennschalter den Abgang direkt mit der Sammelschiene. Es muß dafür gesorgt werden, daß durch Öffnen eines Leistungs- bzw. Kuppelschalters der Abgang selektiv abgeschaltet werden kann. D.h. der Bypaßtrennschalter wird im Ersatzschalterbetrieb gefahren.

Es gibt zwei Möglichkeiten, bei denen der Ersatzschalterbetrieb gewährleistet ist.

1. Der Abgang mit dem Bypaßtrennschalter ist mit einem anderen Abgang über genau einen Weg verbunden.

2. Der Abgang mit dem Bypaßtrennschalter ist mit mehreren Abgängen aber über einen gemeinsamen Kuppelschalter verbunden, mit dem sich die Verbindung durch einen Schaltvorgang unterbrechen läßt.

Alle anderen Schaltungskonfigurationen führen zu einer Sperre, wie z.B.: Der Abgang mit dem Bypaßtrennschalter ist über mehrere Wege mit einem anderen Abgang oder mit mehreren Abgängen verbunden. In dieser Situation können die Abgänge nicht durch genau eine Schalthandlung voneinander getrennt werden. Da die Umgehungsschiene nur als Hilfsschiene ausgelegt ist, muß verhindert werden, daß zwei Sammelschienen über die Umgehungsschiene gekuppelt werden.

Werden Umgehungsschienen-Trennschalter im Baumgebiet gefunden, so ist die Umgehungsschiene im Betrieb. Durch Starten einer Baumsuche von einem Umgehungsschienen-Trennschalter ausgehend wird überprüft, ob beide Seiten dieses Trennschalters mit der gleichen Sammelschiene verbunden sind. Eine Kupplung von zwei Sammelschienen über die Umgehungsschiene liegt dann vor, wenn von beiden Seiten des Umgehungsschienen-Trennschalters unterschiedliche Sammelschienen gefunden werden. In diesem Falle muß die ursprüngliche Freigabe, die der Dominanzvergleich ergeben hat in eine Sperre umgewandelt werden.

Wird ein Ersatzschalterbetrieb unterbrechungsfrei beendet, so wird erzwungen, daß der Abgang mit der gleichen Sammelschiene mit der er vor dem Ersatzschalterbetrieb verbunden war geschaltet wird. Anderenfalls würde eine Kupplung über die Umgehungsschiene entstehen.

Werden leerlaufende Sammelschienen an Spannung geschaltet, so fließen kapazitive Aufladeströme, da Sammelschienen bzw. Leistungen Kapazitäten gegen Erde darstellen. Die Größe der Kapazität ist abhängig von Art und Länge der Sammelschiene bzw. Leistung. Geschieht das Zuschalten der leerlaufenden Sammelschiene mit einem Trennschalter, so ist zu überprüfen, ob der Aufladestrom nicht zu groß wird.

Zu diesem Zweck ist es günstig, eine auf den Knoten bezogenen Größe (Kapazität) einzuführen, die ein Maß für den Aufladestrom darstellt. Da sich Ströme in einem Knotenpunkt addieren, wird die Summe der Kapazitäten aller im Baum befindlichen Knoten gebildet. Überschreitet die Summe einen bestimmten Wert, der paramentriebar ist, so wird der Aufladestrom zu groß und die Schalthandlung muß gesperrt werden.

Handbetätigte Schaltgeräte werden wie fernsteuerbare Schaltgeräte behandelt. Nach einer Handschaltung muß der Zustand des Schaltgerätes von Benutzer am Rechner nachgeführt werden.

Derjenige, der eine Handschaltung vornehmen will, leitet die Schaltanforderung per Telefon oder Sprechfunk zu der Schaltwarte. Dort wird eine Freigabe oder Sperre der Schaltanforderung ermittelt und diese demjenigen in der Schaltanlage mitgeteilt. Bei einer Freigabe wird die Schalthandlung durchgeführt und der neue Zustand des Schaltgerätes der Schaltwarte übermittelt. Der neue Zustand wird am Rechner nachgeführt.

Nach den bisherigen Verriegelungsbedingungen ist das Zuschalten eines Abganges einer bestimmten Schaltreihenfolge unterworfen, um zu verhindern, daß ein Trennschalter unter Last geschaltet wird. Der Abgangstrennschalter und der entsprechende Sammelschienen-Trennschalter dürfen nur geschlossen werden, wenn der Abgangsleistungsschalter noch offen ist. Mit dem Abgangsleistungsschalter wird dann die Sammelschiene an Spannung geschaltet. Spannung mit einem Sammelschienen-Längstrennschalter weiterzuschalten ist nicht erlaubt. Ein Längstrennschalter darf nur eingeschaltet werden, wenn beide Sammelschienenabschnitte geerdet oder beide spannungslos sind.

Ist der gesamte Schaltungszustand bekannt, so kann auch eine andere Schaltreihenfolge zugelassen werden. Nach Schließen des Abgangstrennschalters und des Abgangsleistungsschalters kann der Sammelschienen-Trennschalter dann geschlossen werden, wenn auf der anderen Seite sich ein isoliertes Gebiet befindet und der kapazitive Kommutierungsstrom einen bestimmten Wert nicht überschreitet.

Weiterhin kann die Spannung mit dem Sammelschienen-Längstrennschalter fortgeschaltet werden, wenn die gleichen Bedingungen wie vorher erfüllt sind.

Vor jeder Schalthandlung wird noch überprüft, ob das entstehende Gebiet die Trennstreckenbedingung erfüllt, um zu verhindern, daß ein unter Spannung stehendes Gebiet und ein geerdetes Gebiet nicht nur durch einen Leistungsschalter getrennt sind.

Diese Strategie der Spannungsfortschaltung kann auf beliebige Schaltanlagenteile angewendet werden.

Befinden sich gestörte Schaltgeräte in der Schaltanlage und werden sie in bisherigen Verfahren zur Entscheidungsfindung herangezogen, so ist ein verriegeltes Schalten nur noch sehr eingeschränkt möglich.

Durch Kenntnis des gesamten galvanisch zusammenhängenden Gebietes und der Dominanzen bzw. der parallelen Wege kann eine Aussage gemacht werden, ob über die Störstellung ein Stromfluß zustande kommt oder nicht.

Ein Sammelschienen-Erdungsschalter darf nach bekannten Regeln nur geschlossen werden, wenn alle Sammelschienen-Trennschalter der durchgeschalteten Sammelschiene offen sind und sich nicht in Zwischenstellung (Störstellung) befinden. Bleibt ein Sammelschienen-Trennschalter in Störstellung, so kann die Sammelschiene nicht verriegelt betriebsmäßig geerdet werden, obwohl alle andere Sammelschienen-Trennschalter offen sind und der Abgangsleistungsschalter und Abgangstrennschalter in dem Feld, in dem sich die Störstellung befindet, ebenfalls offen sind. Die Sammelschiene kann also nur unverriegelt geerdet werden.

Das erfindungsgemäße Verfahren erkennt den oben geschilderten Zustand und erlaubt die Sammelschiene betriebsmäßig zu erden, da ein Gebiet entsteht, das durch offene Trennstrecken von dem übrigen Teil der Schaltanlage getrennt ist. Dies ist nämlich die Voraussetzung dafür, daß ein Gebiet geerdet werden darf.

## Störstellung in einem parallelen Weg

Bleibt bei einem Sammelschienenwechsel ein Sammelschienen-Trennschalter in Störstellung hängen, so kann der Sammelschienenwechsel in den anderen Abgängen noch zu Ende geführt werden, da eine korrekte Kupplung der Sammelschienen über den Kuppelschalter existiert. Der Kuppelschalter kann jedoch nicht geöffnet werden, da eine Kupplung der Sammelschienen über die Störstellung zurückbleiben würde. Der andere Sammelschienen-Trennschalter ist gesperrt, da sonst ein Stromfluß über die Störstellung erzwungen würde, weil der Abgang noch eingeschaltet ist.

Nach Abschalten des Abganges ist gewährleistet, daß durch Öffnen des anderen Sammelschienen-Trennschalters kein Stromfluß über die Störstellung zustande kommt. Jetzt ist der Kuppelschalter nicht mehr gesperrt, weil kein paralleler Weg zum Kuppelschalter existiert.

Sollen die Abgänge einer Sammelschiene komplett auf eine andere Sammelschiene gewechselt werden, so gibt es zwei Möglichkeiten dies durchzuführen:

1. Sammelschienenwechsel in den einzelnen Abgängen nacheinander (SSW feldweise)
2. gleichzeitiger Sammelschienenwechsel in allen Abgängen (SSW sammelschienenweise)

Die erste Möglichkeit hat den Nachteil, daß sie bei einer größeren Anzahl von Abgängen eine längere Zeit beansprucht wird. Der Schaltvorgang von Trennschaltern dauert nämlich mehrere Sekunden.

Die zweite Möglichkeit umgeht diesen Nachteil, indem alle Trennschalter direkt nacheinander geschaltet werden. In der Zeit des Schaltvorganges ist das Schaltgerät in irgendeiner Zwischenstellung und somit wie gestört zu behandeln. Bei der Schaltanforderung des zweiten Sammelschienen-Trennschalters existieren zwei Wege zu dem angeforderten Schaltgerät, nämlich erstens der parallele Weg über den Kuppelschalter und zweitens der parallele Weg über die beiden Sammelschienen-Trennschalter des Abgangs, der sich im Sammelschienenwechsel befindet. Der eine Sammelschienen-Trennschalter ist jedoch wie eine Störstellung zu behandeln, da der Schaltvorgang noch nicht beendet ist.

Die Freigabe der zweiten Schalthandlung erfolgt aufgrund der korrekten parallelen Weges über den Kuppelschalter. Der parallele Weg mit der Störstellung ist ohne Bedeutung.

Bei allen anderen Schaltanforderungen, die den Sammelschienenwechsel betreffen, existiert mindestens der parallele Weg über den Kuppelschalter, sodaß eine Freigabe gegeben werden kann, d.h. daß die Schaltvorgänge im Primärsystem quasi parallel ablaufen können.

Ist der Sammelschienenwechsel in allen Abgängen durchgeführt, d.h. alle Trennschalter haben den Endzustand erreicht, so kann auch der Kuppelschalter geöffnet werden.

Um einen Abgangsleistungsschalter nach den bekannten Verriegelungsbedingungen zu erden, müssen die Sammelschienen-Trennschalter und der Abgangstrennschalter offen sein. Sind jedoch keine separaten Erdungsschalter für den Leistungsschalter vorgesehen, so muß der Leistungsschalter durch Arbeitserder unverriegelt geerdet werden.

Nach dem erfindungsgemäßen Verfahren kann ein Abgangsleistungsschalter über den Abgangstrennschalter betriebsmäßig geerdet werden, wenn sich an diese beiden Schalter nur offene Trennschalter anschließen.

Danach kann der Leistungsschalter durch Arbeitserder beidseitig geerdet werden.

17

**Ansprüche**

1. Verfahren zum schaltfehlergeschützten Betätigen der Schaltgeräte einer Schaltanlage, wobei der topologische Aufbau der Schaltanlage und vom topologischen Aufbau unabhängige Schaltfehlerschutz-Verriegelungsregeln gespeichert werden, die auf einen Basissatz von topologischen Elementen aufbauen, mit denen alle möglichen Betriebszustände beliebig aufgebauter Schaltanlagen angebbar sind, und wobei aus den aktuellen Stellungsmeldesignalen der Schaltgeräte der Schaltanlage und dem gespeicherten topologischen Aufbau der Schaltanlage mit dem Basissatz von topologischen Elementen der aktuelle Betriebszustand der Schaltanlage gebildet und mittels der gespeicherten Schaltfehlerschutz-Verriegelungsregeln zur Freigabe oder Blockierung von Schalthandlungs-Anforderungsbefehlen verarbeitet wird,
**dadurch gekennzeichnet,**
daß als Basissatz die Anfangs- und Endknoten und der Typ der Schaltgeräte sowie die Randknoten verwendet werden und daß durch einen Schalthandlungs-Anforderungsbefehl für ein Schaltgerät, ausgehend von dessen Anfangs- und Endknoten, Baumentwicklungen durchgeführt werden, mit denen unter Einbeziehung des Zustands der Schaltgeräte galvan isch verbunde Gebiete festgestellt werden, und daß aus dem Gesamtzustand des Gebiets durch Vergleich mit Schaltfehlerschutz-Verriegelungsregeln die Freigabe oder Blockierung des Schalthandlungs-Anforderungsbefehls bestimmt wird.

2. Verfahren nach Anspruch 1,
**dadurch gekennzeichnet,**
daß für die galvanisch verbundenen Teile dominante Zustände nach folgender Priorität ermittelt werden: Spannung, Last, Erde, isolierter Knoten, undefiniertes Gebiet und daß die dominanten Zustände mit den Schaltfehlerschutz-Verriegelungsregeln verglichen werden.

3. Verfahren nach Anspruch 1 oder 2,
**dadurch gekennzeichnet,**
daß die dominanten Zustände der Anfangs- und Endknoten des Schaltgeräts bestimmt werden, für das der Schalthandlungs-Anforderungsbefehl vorliegt, und daß die Freigabe oder Blockierung von kritischen oder unkritischen Dominanzdoublen abhängt, wobei die kritischen Dominanzdoublen durch sicherheitsrelevante Verriegelungsregeln und die unkritischen durch betriebsrelevante Bedingungen bestimmt sind.

4. Verfahren nach einem oder mehreren der vorliegenden Ansprüche,
**dadurch gekennzeichnet,**
daß bei einem durch die Baumentwicklung festgestellten parallelen Pfad eine zweigorientierte Baumentwicklung zur Feststellung aller Parallelpfade durchgeführt wird.

Fig. 1

I

F5 — Q21

A

F1 — Q25    F2 — Q2    F3 — Q2    F4 — Q2

B

E

Fig. 2

Fig. 3

# Fig. 4

Struktogramm: Baumsuche

| Initialisierung der Übergabeparameter und Hilfsgrössen |
| --- |

| Startwerte setzen |
| --- |

| Bestimmen der DOMINANZ |
| --- |

Ist AKTKNO = Erdpotential ?

| Ja | Nein |
| --- | --- |
| NOCH_KNOTEN := False;  DOMINANZ := 2; | NOP |

Ist Schaltgeräteart = US-Trennschalter ?

| Ja | Nein |
| --- | --- |
| Merken der US-Trennschalter | NOP |

Solange NOCH_KNOTEN = True ist

For erster Zweig von AKTKNO to letzter Zweig von AKTKNO do

Ist Zweig nicht angefordertes Schaltgerät ?

| Ja | | | | Nein |
| --- | --- | --- | --- | --- |

Ist STOER_WEITER = True ?

| Ja | | Nein | | NOP |
| --- | --- | --- | --- | --- |

| Ist Schaltgerätezustand gleich gestört oder geschlossen ? | | Ist Schaltgerätezustand gleich geschlossen ? | | |
| --- | --- | --- | --- | --- |
| Ja | Nein | Ja | Nein | |
| Eintragen im Baum mit Belegung der Übergabeparameter | NOP | DOMINANZ := -2 bei Störstellung | NOP | |
| Merken der offenen Randschalter | | Eintragen im Baum | | |
| | | Merken der offenen Randschalter | | |

Ist I_BAUMKNO grösser I_AKTKNO ?

| Ja | Nein |
| --- | --- |
| I_AKTKNO := I_AKTKNO + 1<br>AKTKNO := nächster Knoten im Baum | NOCH_KNOTEN := False |

Sind Störstellungen im Baum gefunden und DOMINANZ = Isoliert ?

| Ja | Nein |
| --- | --- |
| DOMINANZ := 4 | NOP |

| Baumeinfärbung |
| --- |

Initialisierung der Übergabeparameter und der Hilfsgrössen

Startwerte setzen: NOCH_SCHALTER := True; NOCH_ELEMENT := 1;

Solange Zeilen im Hilfsfeld EB_FELD vorhanden sind (EB_ZAEHL grösser Null)

Solange noch nicht alle Elemente in der aktuellen Zeile des EB_FELD abgearbeitet sind (NOCH_SCHALTER grösser Null)

Solange noch nicht eingetragene Schaltgeräte vorhanden sind

NOCH_SCHALTER := False;

For erster Zweig des aktuellen Knotens to letzter Zweig dieses Knotens do

| Ist STOER_WEITER = True ? | |
|---|---|
| Ja | Nein |
| Berücksichtigen der geschlossenen und gestörten Schaltgeräte | Berücksichtigen der geschlossenen Schaltgeräte |
| Ist anderer Knoten erreicht ? | Ist anderer Knoten erreicht ? |
| Ja / Nein | Ja / Nein |
| paralleler Weg in PFAD_FELD / Eintrag in EB_FELD; NOCH_SCHALTER:=True; | paralleler Weg in PFAD_FELD / Eintrag in EB_FELD; NOCH_SCHALTER:=True; |

| Ist NOCH_SCHALTER = True ? | |
|---|---|
| Ja | Nein |
| EB_ZAEHL := EB_ZAEHL + 1 | EB_ZAEHL := EB_ZAEHL - 1 |

NOCH_ELEMENT := vorheriges Element in der gleichen Zeile

| Ist NOCH_ELEMENT grösser Null ? | | |
|---|---|---|
| Ja | | Nein |
| Ist EB_ZAEHL grösser Null? | | NOP |
| Ja | Nein | |
| Aktueller Knoten neu belegen EB_ZAEHL := EBZAEHL + 1 | EB_ZAEHL := 0 | |

vorherige Zeile des EB_FELD initialisieren; EB_ZAEHL := EBZAEHL - 1

Aktueller Knoten neu belegen

Pfadeinfärbung

Fig. 5